# EUROPÄISCHE PATENTANMELDUNG

(11) **EP 3 889 446 A1**
(43) Veröffentlichungstag der Anmeldung: **06.10.2021**
(21) Anmeldenummer: 21165342.3
(22) Anmeldetag: 26.03.2021
(51) Int. Cl.: F16B 5/00, F16B 11/00, F16B 37/04, E04B 2/74

(54) **VERFAHREN ZUR HERSTELLUNG EINER BEFESTIGUNGSANORDNUNG**

(30) Priorität: 30.03.2020 DE 102020204064
(71) Anmelder: Rixen, Wolfgang Klaus, 42699 Solingen (DE); Pies, Gerrit, 42699 Solingen (DE)
(72) Erfinder: GABLER, Guido, 42651 Solingen (DE); HAAS, Kevin, 40229 Düsseldorf (DE); BURZYNSKI, Lukasz, 42651 Solingen (DE)
(74) Vertreter: BRP Renaud & Partner mbB Rechtsanwälte Patentanwälte Steuerberater

(57) **Zusammenfassung**

Die Erfindung betrifft ein Verfahren zur Herstellung einer Befestigungsanordnung (1) mit einem über ein Halteelement (2) an einem Profilrohr (3) befestigten Flächenelement (4), bei dem
- auf eine Seite (10) des Halteelements (2) eine Klebstoffschicht (5) aufgebracht und mit einer Abdeckung (16) mit einer überstehenden Abziehlasche (17) überdeckt wird,
- das Haltelement (2) mit einem daran angeordneten Hammerkopfelement (7) in eine Längsnut (6) des Profilrohrs (3) eingesteckt und über eine 90° Drehbewegung fixiert wird,
- das Flächenelement (4) derart auf die mit der Klebstoffschicht (5) belegte Seite (10) des Halteelements (2) aufgelegt wird, dass die Abziehlasche (17) zwischen dem Flächenelement (4) und der die Längsnut (6) aufweisenden Seite (18) des Profilrohrs (3) heraussteht,
- die Abdeckung (16) über die Abziehlasche (17) herausgezogen wird, wodurch das Flächenelement (4) mit der Klebstoffschicht (5) verklebt wird.

Hierdurch kann eine einfach herzustellende, kostengünstige und reinraumgeeignete Befestigungsanordnung (1) geschaffen werden.

## Beschreibung

Die vorliegende Erfindung betrifft ein Verfahren zur Herstellung einer Befestigungsanordnung mit einem an einem Halteelement eines Profilrohrs befestigten Flächenelement gemäß dem Oberbegriff des Anspruchs 1. Die Erfindung betrifft außerdem eine nach diesem Verfahren hergestellte Befestigungsanordnung.

Aus der DE 34 22 222 A1 ist eine gattungsgemäße Befestigungsanordnung zur Befestigung eines Flächenelements über ein Halteelement an einem Profilrohr bekannt, wobei an dem Profilrohr eine hinterschnittene Längsnut vorgesehen ist, in deren Hinterschneidung das Halteelement mit einem Klemmkopf eingreift. Der Klemmkopf ist dabei über einen Hals mit dem Halteelement verbunden, an dem sich Verbindungsflächen mit einer dazu senkrechten Befestigungsbohrung befinden. Um unterschiedlich starke Flächen fluchtend oder bündig mit einer Längsseite des Profilrohres anordnen zu können, weisen die Halteelementflächen einen unterschiedlich großen Abstand zum Hals des Halteelements auf.

Aus der WO 2006/125546 A1 ist ein Reinraum bekannt, der aus einem Traggerüst besteht, das einen Innenraum begrenzt. Wände, ein Boden sowie eine Decke sind dabei bevorzugt jeweils durch Paneele ausgebildet, die an Tragprofilen des Traggerüsts lösbar mit Hilfe von Befestigungselementen befestigt sind. Zur Gewährleistung der Abdichtung sind Randseiten eines jeden Paneels jeweils unter Einschluss eines vollständig um das jeweilige Paneel umlaufenden Dichtungselements gegen ein jeweiliges Tragprofil oder ein benachbartes Paneel gepresst. Das Dichtungselement ist dabei insbesondere eine PTFE-Flachbanddichtung. Hierdurch soll ein Reinraum flexibel und zugleich gasdicht hergestellt werden können.

Aus der EP 2 722 462 A2 ist ein Befestigungssystem zur Befestigung eines Reinraumwandelements mit zumindest einem Halteprofil und zumindest einem Befestigungselement bekannt, das zumindest in einem montierten Zustand gemeinsam mit dem Halteprofil einen Formschlussbereich bildet. Das Befestigungselement besitzt dabei ein Kopfelement mit einer Auflagefläche und ein Rastelement mit einem Rastarm. Die Auflagefläche des Kopfelements weist dabei in einem montierten Zustand einen von einem rechten Winkel abweichenden Winkel α auf, der größer als 90 Grad ist, wobei zugleich eine auftragende Materialdicke eines Dichtbelags von innen nach außen zunimmt und wobei das Befestigungselement in einer verrasteten Endlage einen Spannungszustand erzeugt, der dazu führt, dass der Dichtbelag eingeklemmt und teilweise herausgedrückt wird. Hierdurch soll eine Rastbefestigung eines Flächenelements an einem Profilrohr geschaffen werden, wobei jedoch ein Rastarm des Befestigungselements durch das Flächenelement, das heißt in diesem Fall durch das Reinraumwandelement, geführt ist.

Üblicherweise werden Flächenelemente bzw. Platten, insbesondere transparente Flächenelemente aus Kunststoff, in Profilrahmenkonstruktionen über entsprechende Halteelemente an Profilrohren befestigt, wobei eine Befestigung üblicherweise auch eine Durchgangsöffnung durch das jeweilige Flächenelement erfordert, um beispielsweise eine Verschraubung ausführen zu können. Alternativ zu einer derartigen Schraubverbindung sind selbstverständlich auch Klemmverbindungen denkbar. Hierbei kommen oftmals sogenannte Multiblöcke zum Einsatz, die entweder mit einem integral angeordneten Hammerkopfelement oder mit Hilfe eines Nutensteins in einer jeweiligen Längsnut eines zugehörigen Profilrohrs der Profilrahmenkonstruktion fixiert werden. Die Bearbeitung der Flächenelemente ist jedoch vergleichsweise kostenintensiv und hat zudem den Nachteil, dass insbesondere bei Reinraumkonstruktionen und verschraubten Flächenelementen, Schraubenköpfe im Reinraumbereich nachträglich noch reinraumtauglich gemacht, beispielsweise verspachtelt oder mit Silikon überdeckt, werden müssen, was einen nicht zu unterschätzenden Nachbearbeitungsaufwand mit sich bringt. Darüber hinaus sind in Reinraumumgebungen allgemein ebene Flächen gefordert und zusätzlich sollten jegliche Kanten, Spalten, etc. nach Möglichkeit vermieden werden, um eine entsprechend hohe Klassifizierung nach GMP-Standard oder ISO-Standard erreichen zu können.

Die vorliegende Erfindung beschäftigt sich daher mit dem Problem, ein verbessertes Verfahren zur Herstellung einer Befestigungsanordnung sowie eine verbesserte Befestigungsanordnung an sich anzugeben, die insbesondere einfacher und kostengünstiger ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Flächenelement, beispielsweise eine Plexiglasscheibe, nicht mehr wie bislang über Schraub- oder Klemmverbindungen an einem Halteelement und darüber an einem Profilrohr zu fixieren, sondern erfindungsgemäß über eine Klebeverbindung, welche es ermöglicht, auf bislang erforderliche Bohrarbeiten an dem Flächenelement zum Durchführen beispielsweise einer Schraube, zu verzichten. Zugleich kann über eine derartige Klebeverbindung das Flächenelement bzw. Plattenelement auch vergleichsweise einfach und ohne zusätzliche Fachkenntnisse bzw. Ausrüstung und damit insgesamt kostengünstig montiert werden. Das Herstellen der Befestigungsanordnung mit einem an einem Halteelement eines Profilrohres befestigten Flächenelement erfolgt dabei wie folgt: Zunächst wird auf einer Seite des Halteelements eine Klebstoffschicht aufgebracht und mit einer U-förmig gefalteten Abdeckung mit einer überstehenden Abziehlasche überdeckt. Die Abdeckung kann beispielsweise folienartig ausgebildet sein und dient lediglich dem Schutz der Klebstoffschicht vor dem Verkleben mit dem Flächenelement. Das Halteelement wird anschließend mit einem daran angeordneten Hammerkopfelement bzw. einem Nutenstein in eine Längsnut des Profilrohrs eingesteckt und über eine 90 Grad-Drehbewegung derart fixiert, dass die Abziehlasche an der Seite des Profilrohrs mit der Längsnut anliegt. Dies ist deshalb erforderlich, um die Abziehlasche nach dem Auflegen des Flächenelements ergreifen und herausziehen zu können. Anschließend wird das Flächenelement derart auf die mit der Klebstoffschicht belegte Seite des Halteelements aufgelegt, dass die Abziehlasche zwischen dem Flächenelement und der Seite des Profilrohrs mit der Längsnut heraussteht. Die Abziehlasche steht somit im Wesentlichen zwischen einem Rand des Flächenelements und der Seite des Profilrohrs mit der Längsnut senkrecht zum Flächenelement heraus und kann dadurch vergleichsweise einfach ergriffen werden. Ist das Flächenelement richtig positioniert, wird die Abdeckung über die Abziehlasche herausgezogen, wodurch ein direkter Kontakt des Flächenelements mit der Klebstoffschicht und damit eine Verklebung des Flächenelements mit der Klebstoffschicht erfolgt und das Flächenelement an dem Halteelement fixiert wird. Durch das erfindungsgemäße Verfahren ist es möglich, eine Befestigung des Flächenelements an dem Halteelement zu schaffen, die von einer Sichtseite her nicht mehr sichtbar ist, zumindest sofern das Flächenelement nicht transparent ausgebildet ist. Darüber hinaus erfordert die erfindungsgemäße Klebeverbindung auch keinerlei Vorbearbeitung des Flächenelements, ebenso wenig wie zusätzliche Fachkenntnisse bzw. Ausrüstung, so dass das erfindungsgemäße Verfahren zur Herstellung der Befestigungsanordnung selbst von angelernten Kräften problemlos durchgeführt werden kann. Aufgrund des Wegfalls von erforderlichem Werkzeug bzw. zusätzlicher Verbindungsmittel wie beispielsweise Schrauben, kann die Befestigungsanordnung zudem kostengünstig und schnell hergestellt werden, was ebenfalls einen großen Vorteil im Vergleich zu bislang bekannten Herstellverfahren von Befestigungsanordnungen darstellt. Das erfindungsgemäße Verfahren zur Herstellung der Befestigungsanordnung eignet sich zudem besonders für Reinraumanwendungen, bei denen allgemein ebene Flächen gefordert sind und bei denen durch die erfindungsgemäße Befestigungsanordnung dementsprechend keine Nachbearbeitung von Schraubenköpfen im Reinraumbereich erfolgen muss. Zudem kann das jeweilige Flächenelement bei noch nicht ausgehärteter Klebstoffschicht spannungsfrei verschoben und dadurch insbesondere nachjustiert werden, was mit bisher bekannten Schraubverbindungen ebenfalls nicht oder nur schwer möglich war.

Dabei ist selbstverständlich klar, dass an dem Halteelement nicht nur auf einer Seite eine derartige Klebstoffschicht bzw. eine diese überdeckende Abdeckung mit einer überstehenden Abziehlasche angeordnet werden kann, sondern beispielsweise auch an benachbarten oder gegenüberliegenden Seiten, wodurch beispielsweise bei einer Anordnung zweier Klebstoffschichten auf gegenüberliegenden Seiten des Halteelements eine vergleichsweise einfach herzustellende Doppelverglasung bzw. Doppelbelegung des Halteelements mit entsprechenden Flächenelementen möglich ist. Mit dem erfindungsgemäßen Verfahren lässt sich somit ein Flächenelement an einem zugehörigen Profilrohr preisgünstig, einfach, schnell, justierbar, spannungsfrei, nahezu unsichtbar und bearbeitungslos befestigen.

Bei einer vorteilhaften Weiterbildung der erfindungsgemäßen Lösung wird vor dem Auflegen des Flächenelements auf die mit der Klebstoffschicht belegte Seite des Halteelements ein Positionierelement angeordnet, welches einen vordefinierten Abstand eines Randes des Flächenelements zur Seite des Profilrohrs mit der Längsnut definiert. Hierdurch kann bis zum Aushärten der Klebstoffschicht ein unter Umständen schwerkraftbedingtes Verrutschen des Flächenelements zuverlässig verhindert werden. Ein derartiges Positionierelement kann als kostengünstiges Kunststoffspritzgussteil ausgebildet und beispielsweise über eine Rast- bzw. Clipsverbindung mit dem Halteelement verbunden werden. Durch derartige Positionierelemente kann insbesondere auch ein optisch ansprechender paralleler Abstand eines Randes des Flächenelements zum jeweilig zugehörigen Profilrohr geschaffen werden.

Bei einer vorteilhaften Weiterbildung der erfindungsgemäßen Lösung wird die U-förmig gefaltete Abdeckung derart auf der Klebstoffschicht an dem Halteelement angeordnet, das bei an dem Profilrohr montiertem Halteelement die U-Form zur Seite des Profilrohrs mit der Längsnut hin offen ist. Hierdurch kann zuverlässig gewährleistet werden, dass die Abziehlasche bei auf der Abdeckung abgelegtem Flächenelement bzw. Plattenelement zwischen dem Rand des Flächenelements bzw. Plattenelements und dem Profilrohr heraussteht und anschließend zum Herstellen der Klebeverbindung einfach von einem Werker ergriffen und herausgezogen werden kann.

Bei einer weiteren vorteilhaften Ausführungsform des erfindungsgemäßen Verfahrens wird ein transparentes Flächenelement verwendet. Ein derartiges transparentes Flächenelement kann beispielsweise eine Kunststoffscheibe sein, wodurch insbesondere durchsichtige Anwendungen, insbesondere auch in einem Reinraumbereich, vergleichsweise einfach realisiert werden können.

Die vorliegende Erfindung beruht weiter auf dem allgemeinen Gedanken, eine Befestigungsanordnung anzugeben, mit zumindest einem eine Längsnut aufweisenden Profilrohr, einem Halteelement, das auf zumindest einer Seite eine Klebstoffschicht aufweist sowie mit zumindest einem Flächenelement, das über die Klebstoffschicht mit dem Halteelement verklebt und darüber an dem Halteelement fixiert ist. Diese Befestigungsanordnung wird entsprechend dem in den vorherigen Absätzen beschriebenen Verfahren hergestellt, so dass die auf dem Halteelement angeordnete Klebstoffschicht vor dem Verkleben mit dem Flächenelement zunächst von der Abdeckung überdeckt ist. Mit der erfindungsgemäßen Befestigungsanordnung ist es möglich, Flächenelemente an Profilrohren kostengünstig, einfach, schnell, spannungsfrei und bearbeitungslos zu montieren und dadurch eine insbesondere für Reinraumanwendungen in hohem Maße geeignete Befestigungsanordnung zu schaffen, da das Flächenelement nicht mehr wie bislang von einem Befestigungselement, beispielsweise einer Schraube, durchgriffen oder von einem Klemmelement umgriffen wird. Hierdurch ist auch ein Entfall einer Nachbearbeitung, beispielsweise eines Silikonierens eines Schraubenkopfes bzw. eines Klemmschenkels einer Klemmverbindung entbehrlich, wobei die erfindungsgemäße Befestigungsanordnung zudem den großen Vorteil aufweist, dass diese im Reinraumbereich eine durchgängige, ebene Fläche und eine nicht oder nur marginal sichtbare Verbindung zum Halteelement bereitstellt. Mit der erfindungsgemäßen Befestigungsanordnung ist es zudem möglich, zwei Flächenelemente auf aneinandergrenzenden Seiten bzw. gegenüberliegenden Seiten des Halteelements über eine jeweils dort angeordnete Klebstoffschicht zu fixieren, wodurch auch vergleichsweise einfach eine Art "Doppelverglasung" bei zwei parallelen Flächenelementen oder eine "Eckverglasung" möglich ist.

Zweckmäßig ist die mit der Klebstoffschicht belegte Seite des Halteelements gewölbt. Eine derartige konvexe Ausführungsform bzw. Wölbung der mit der Klebstoffschicht belegten Seite des Halteelements bietet den großen Vorteil, dass Lufteinschlüsse beim Abziehen der Abdeckung und Aufdrücken des Flächenelements auf die Klebstoffschicht zuverlässig vermieden werden können.

Hierdurch kann eine tragfähige und optisch ansprechende Klebeverbindung geschaffen werden.

Bei einer weiteren vorteilhaften Ausführungsform der erfindungsgemäßen Lösung ist das Halteelement als Kunststoffspritzgussteil ausgebildet und dadurch nicht nur kostengünstig, sondern auch qualitativ hochwertig und insbesondere durch Auswahl eines entsprechenden Kunststoffs an individuelle Festigkeitsanforderungen anpassbar herstellbar. Zusätzlich oder alternativ kann das Profilrohr als Aluminiumstrangpressprofil ausgebildet sein, wodurch eine vergleichsweise leichte Rahmenkonstruktion möglich ist.

Bei einer vorteilhaften Weiterbildung der erfindungsgemäßen Lösung weist das Halteelement zwei Federarme auf, die bei an/in der Längsnut des Profilrohrs montiertem Halteelement in die Längsnut eingreifen bzw. einrasten und dadurch ein unbeabsichtigtes Verdrehen des Halteelements von seiner Feststellung in eine Losstellung verhindern. Ferner dienen die Federarme zur parallelen Ausrichtung des Halteelements zur Längsnut des Profilrohrs. Die Federarme können dabei als elastische Fortsätze bei dem beispielsweise als Kunststoffspritzgussteil ausgebildeten Halteelement angespritzt werden.

Zweckmäßig weist das Positionierelement zwei Beine und einen diese beiden Beine verbindenden Steg auf, wobei an einem freien Ende der beiden Beine jeweils eine nach innen weisende Rastnase angeordnet ist, über welche eine Rastverbindung an dem jeweiligen Halteelement möglich ist. Hierdurch ist eine vergleichsweise einfache und haptisch wahrnehmbare Montagestellung des Positionierelements an dem an dem Profilrohr angeordneten Haltelement möglich, wobei über derartige Positionierelemente ein zuverlässiges Positionieren und Halten des an dem jeweiligen Halteelement befestigten Flächenelements bis zur Aushärtung der Klebstoffschicht möglich ist.

Zweckmäßig sind an dem Halteelement zwei Leisten angeordnet, die bei an dem Profilrohr montiertem Halteelement parallel zur Längsnut verlaufen und über die sich das Halteelement an dem Profilrohr abstützt. Die beiden Leisten ermöglichen dabei eine kippfreie und feste Montage des Halteelements am zugehörigen Profilrohr und ermöglichen zugleich eine Art Hals zwischen dem Hammerkopf bzw. dem Nutenstein und dem Halteelement, in welchen das zuvor erwähnte Positionierelement eingreifen kann. Die beiden Leisten dienen dabei auch als Gegenrastkonturen für die beiden Rastnasen des Positionierelements und dadurch zu deren Befestigung am Halteelement.

Zweckmäßig ist die Abziehlasche über ihre Rückseite mit der Klebeschicht verklebt, wodurch die Abziehlasche rückverklebt werden kann, um sie zuverlässig in der definierten Position zu halten. Dabei überdeckt die Abdeckung die Klebefläche in der ersten Lage nicht mehr vollständig, sodass ein Bereich verbleibt, der mit der Rückseite der Abziehlasche verklebt und diese dadurch fixiert werden kann. Um ein prozesssicheres Halten der Abziehlasche zu ermöglichen, kann die Abdeckung nur einseitig silikonbeschichtet sein, sodass die Rückseite der Abziehlasche nicht silikonbeschichtet ist und dadurch die Abziehlasche zuverlässig an der Klebeschicht fixiert werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Befestigungsanordnung mit einem an einem Halteelement eines Profilrohrs befestigten Flächenelement,
- Fig. 2: eine Ansicht auf ein erfindungsgemäßes Halteelement,
- Fig. 3: unterschiedliche Ansichten auf das Halteelement,
- Fig. 4 - 7: unterschiedliche Verfahrensschritte zur Herstellung der erfindungsgemäßen Befestigungsanordnung,
- Fig. 8: eine Seitenansicht auf ein Halteelement,
- Fig. 9: eine Schnittdarstellung entlang der Schnittebene A-A aus Fig. 8.

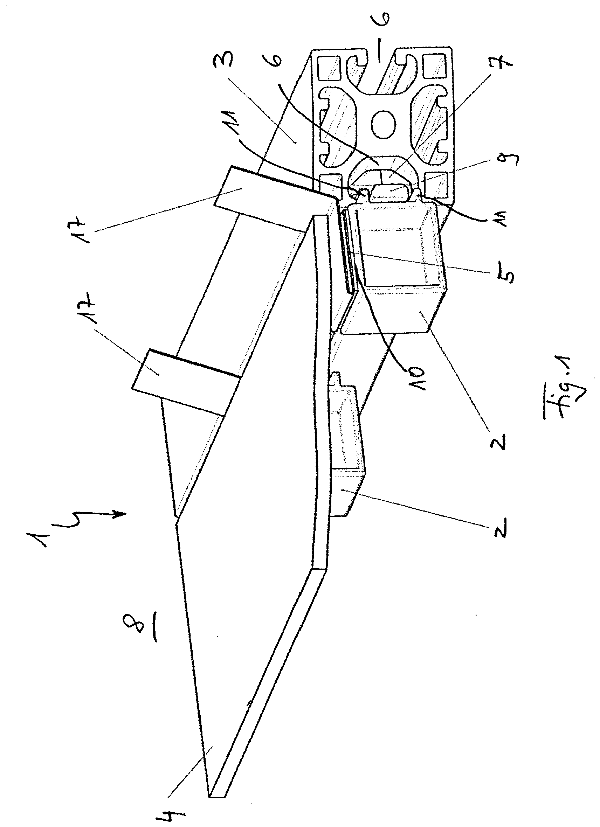

Entsprechend der Figur 1, weist eine erfindungsgemäße Befestigungsanordnung 1 ein an einem Halteelement 2, hier an zwei Halteelementen 2, eines Profilrohrs 3 befestigtes Flächenelement 4 bzw. Plattenelement auf. Eine Fixierung des Flächenelements 4 an den jeweiligen Halteelementen 2 erfolgt dabei über eine auf einer dem Flächenelement 4 zugewandten Seite 10 des Halteelements 2 aufgebrachte Klebstoffschicht 5. Das Profilrohr 3 ist üblicherweise als Aluminiumstrangpressprofil ausgebildet und besitzt zumindest eine, hier zwei, hinterschnittene Längsnuten 6, in welche das jeweilige Halteelement 2 mit einem Hammerkopfelement 7, welches generell auch als Nutenstein bezeichnet werden kann, fest eingreift. Mit der erfindungsgemäßen Befestigungsanordnung 1 ist es möglich, das Flächenelement 4 ohne Durchgangsöffnungen für beispielsweise Schrauben, an den Halteelementen 2 zu befestigen, so dass in einem an das Flächenelement 4 angrenzenden Raum 8, beispielsweise einem Reinraum, eine durchgehende ebene Fläche vorliegt. Zugleich sind dem Raum 8 zugewandt auch keine Schraub- bzw. Klemmelemente vorhanden, die nachträglich reinraumtauglich, das heißt beispielsweise verspachtelt oder versilikonisiert, werden müssen. Mit der erfindungsgemäßen Befestigungsanordnung 1 ist somit eine vergleichsweise hohe Klassifizierung nach GMP- oder ISO-Standard zu erreichen.

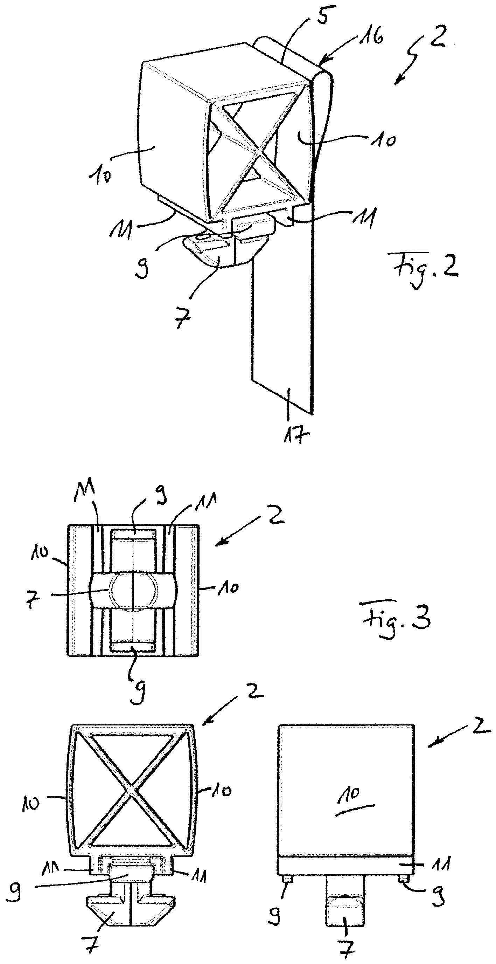

Das eingesetzte Halteelement 2 (vergleiche auch die Figuren 2 und 3) kann beispielsweise als Kunststoffspritzgussteil ausgebildet sein und neben dem Hammerkopfelement 7 zwei Federarme 9 (vergleiche die Figuren 2 und 3) aufweisen, über welche eine Fixierung in der profilrohrseitigen Längsnut 6 möglich ist, da die Federarme 9 bei an dem Profilrohr 3 montiertem Halteelement 2 in die Längsnut 6 eingreifen (vergleiche insbesondere auch die Figur 1) und ein unbeabsichtigtes Verdrehen des Halteelements 2 verhindern.

Betrachtet man das Halteelement 2 weiter, so kann man erkennen, dass zumindest eine Seite 10, auf welcher die Klebstoffschicht 5 angeordnet ist, nach außen gewölbt ist, was den großen Vorteil aufweist, dass beim Verkleben mit dem ebenen Flächenelement 4 keine Lufteinschlüsse auftreten. Dabei kann die Wölbung an der Seite 10 nur in eine Richtung verlaufen, so dass ohne Klebstoffschicht 5 ein im Wesentlichen linienförmiger Kontakt zwischen dem Flächenelement 4 und der Seite 10 auftreten würde, wobei auch eine konvexe Wölbung denkbar ist, so dass in diesem Fall ohne die Klebstoffschicht 5 ein punktförmiger Kontakt zwischen dem ebenen Flächenelement 4 und der Seite 10 erfolgen würde.

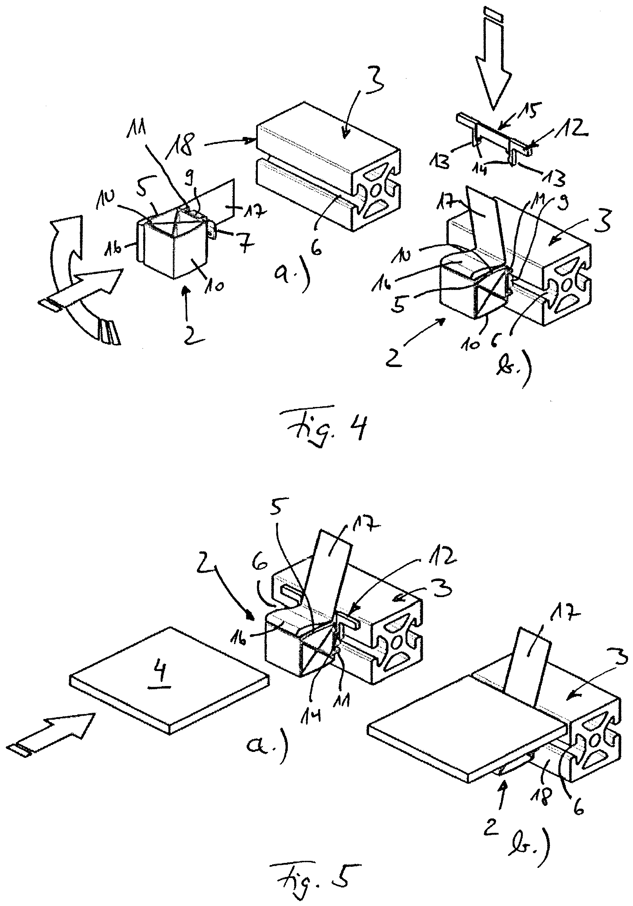

An dem Halteelement 2 können darüber hinaus zwei Leisten 11 angeordnet sein, die bei an dem Profilrohr 3 montiertem Halteelement 2 zwei parallel zur Längsnut 6 verlaufen und über die sich das Halteelement 2 die Leisten 11 bewirken dabei einen vordefinierten Abstand des Halteelements 2 zum Profilrohr 3, welcher - wie nachfolgend noch erläutert - zum Anordnen eines Positionierelements 12 (vergleiche die Figuren 4 bis 6) genutzt werden kann. Ein derartiges Positionierelement 12 besitzt dabei zwei Beine 13 und einen diese beiden Beine 13 verbindenden Steg 15, wobei an den beiden Beinen 13 jeweils eine nach innen weisende Rastnase 14 angeordnet ist, über welche eine Rastverbindung bzw. ein Verrasten mit dem Halteelement 2, konkret mit dessen Leisten 11, möglich ist. Hierdurch ist eine zuverlässige und haptisch wahrnehmbare Montageendstellung des Positionierelements 12 darstellbar.

Die Klebstoffschicht 5 an dem Halteelement 2 ist mittels einer U-förmig gefalteten bzw. gebogenen Abdeckung 16 überdeckt und besitzt eine Abziehlasche 17, über welche die Abdeckung 16 von der Klebstoffschicht 5 abgezogen werden kann. Die Abziehlasche 17 kann generell auch als Anfasslasche bezeichnet werden.

Eine Montage der erfindungsgemäßen Befestigungsanordnung 1 erfolgt dabei wie folgt:
Zunächst wird auf zumindest eine Seite 10 des Halteelements 2 eine Klebstoffschicht 5 aufgebracht und mit der zuvor beschriebenen U-förmig gebogenen Abdeckung 16 mit einer überstehenden Abziehlasche 17 überdeckt.

Dabei ist selbstverständlich klar, dass an dem Halteelement 2 zumindest eine derartige Klebstoffschicht 5 auf einer Seite 10 aufgebracht und mit einer zugehörigen Abdeckung 16 überdeckt wird, wobei rein theoretisch selbstverständlich auch auf zwei gegenüberliegenden Seiten 10 bzw. zwei aneinandergrenzenden Seiten 10 eine derartige Klebstoffschicht 5 bzw. Abdeckung 16 aufgebracht werden kann. Mit zwei gegenüberliegenden Klebstoffschichten 5 ist das Herstellen einer sogenannten "Doppelverglasung" mit zwei parallelen Flächenelementen 4 denkbar, während bei einer Anordnung der beiden Klebstoffschichten 5 an aneinandergrenzenden Seiten 10 eine orthogonale Anordnung zweier Flächenelemente möglich ist.

Anschließend wird das Halteelement 2 mit seinem daran angeordneten Hammerkopfelement 7 entsprechend der Figur 4a in eine zugehörige Längsnut 6 des Profilrohrs 3 eingesteckt und um 90 Grad gedreht, wodurch ein Verdrehen des Hammerkopfelements 7 in der hinterschnittenen Längsnut 6 und darüber ein Fixieren des Halteelements 2 am Profilrohr 3 erfolgt (vergleiche Figur 4b). Ein Verdrehen des Halteelements 2 erfolgt dabei derart, dass die Abziehlasche 17 an der Seite 18 des Profilrohrs 3 mit der Längsnut 6 anliegt, in welche das zugehörige Hammerkopfelement 7 des Halteelements 2 eingreift. Die Abziehlasche 17 verläuft dann im Wesentlichen parallel zur Seite 18 des Profilrohrs 3 (vergleiche Figur 4b) und im Wesentlichen orthogonal zur Seite 10, auf welcher die Klebstoffschicht 5 aufgebracht ist.

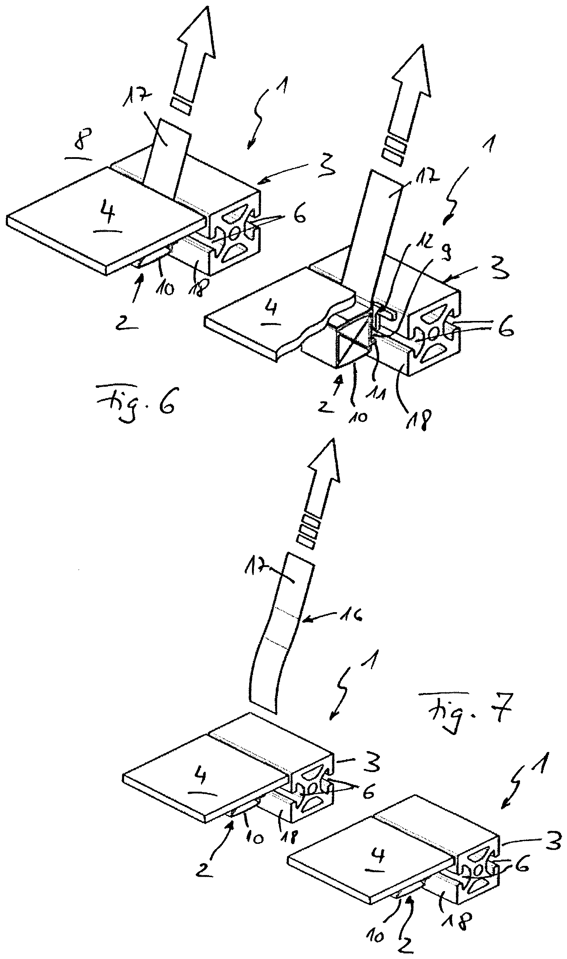

Anschließend wird entsprechend der Figur 5a das zu montierende Flächenelement 4 derart auf die mit der Klebstoffschicht 5 belegte Seite 10 des Halteelements 2 aufgelegt, dass die Abziehlasche 17 zwischen dem Flächenelement 4 und der Seite 18 des Profilrohrs 3 mit der Längsnut 6 heraussteht, wie dies gemäß den Figuren 5a und 5b gezeigt ist. Zur Fixierung des Flächenelements 4 über die Klebstoffschicht 5 am Halteelement 2 erfolgt nun ein Herausziehen der Abdeckung 16 über deren Abziehlasche 17, wie dies gemäß den Figuren 6 und 7 dargestellt ist. Anschließend ist die erfindungsgemäße Befestigungsanordnung 1 fertiggestellt.

Selbstverständlich kann vor dem Auflegen des Flächenelements 4 auf die mit der Klebstoffschicht 5 belegte Seite 10 des Halteelements 2 ein Positionierelement 12 angeordnet werden (vergleiche die Figuren 4b und 5a), welches einem vordefinierten Abstand eines Randes des Flächenelements 4 zur Seite 18 des Profilrohrs 3 mit der Längsnut 6 definiert. Ein derartiges Positionierelement 12 ermöglicht auch eine Fixierung des Flächenelements 4 bei noch nicht ausgehärteter Klebstoffschicht 5 und verhindert dadurch ein Verrutschen desselben analog zu einem Fließenkreuz.

Zur Montage des Positionierelements 12 wird dieses mit seinen beiden Beinen 13 über die Leiste 11 des Halteelements 2 geschoben, bis die Rastnasen 14 an den jeweils freien Enden der Beine 13 die Leiste 11 hintergreifen und dadurch das Positionierelement 12 am Halteelement 2 fixieren. Über den Steg 15 des Positionierelements 12 erfolgt dann eine vorzugsweise parallele Ausrichtung des Randes des Flächenelements 4 zur Seite 18 des Profilrohrs 3.

Um ein einfaches Herausziehen der Abdeckung 16 über die Abziehlasche 17 zu ermöglichen, wird die U-förmig gebogene bzw. gefaltete Abdeckung 16 derart auf der Klebstoffschicht 5 an dem Halteelement 2 angeordnet, dass bei an dem Profilrohr 3 montiertem Halteelement 2 die U-Form der Abdeckung 16 zur Seite 18 des Profilrohrs 3 mit der Längsnut 6 hin offen ist, wie dies gemäß den Figuren 1, 4b und 5a zu entnehmen ist.

Als Flächenelement 4 kann beispielsweise ein transparentes Flächenelement verwendet werden, wodurch eine Art Scheibe entsteht.

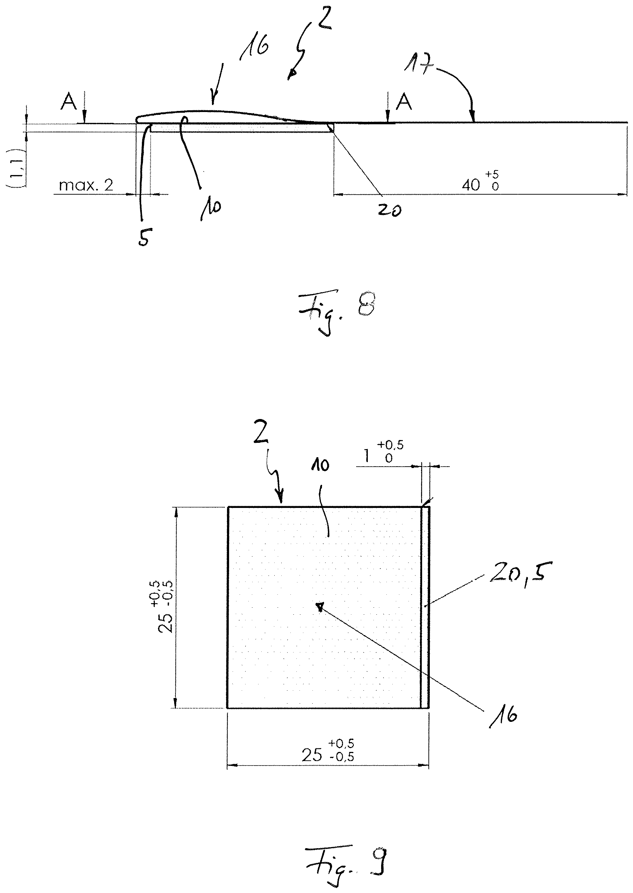

Entsprechend den Fig. 8 und 9 wird eine weitere mögliche Ausführungsform des Halteelements 2 gezeigt, bei der die Abziehlasche 17 um 180° umgebogen und über ihre Rückseite 19 mit der Klebeschicht 5 verklebt ist, wodurch die Abziehlasche 17 beim Montieren nicht in eine unerwünschte Position flattern und im Worst Case von ihrer definierten 180° Umlegung abkommen kann. Die Abziehlasche 17 wird einfach rückverklebt, um sie zuverlässig in der definierten Position zu halten.

Die Abdeckung 16 überdeckt somit die Klebefläche 5 in der ersten Lage nicht mehr vollständig, sodass ein Bereich 20 verbleibt, der mit der Rückseite 19 der Abziehlasche 17 verklebt werden kann. Um ein prozesssicheres Halten der Abziehlasche 17 zu ermöglichen, kann die Abdeckung 16 zudem nur einseitig silikonbeschichtet sein, sodass die Rückseite 19 der Abziehlasche 17 nicht silikonbeschichtet ist und dadurch die Abziehlasche 17 zuverlässig an der Klebeschicht 5 fixiert werden kann.

Die Abziehlasche 17 kann beispielsweise eine Länge von ca. 40 mm aufweisen, um zuverlässig gegriffen werden zu können. Der nicht von der Abdeckung 16 überdeckte und mit der Rückseite 19 der Abziehlasche 17 verklebte Bereich 20 kann ca. 0,5 mm bis 1,5 mm betragen. Der Bereich 20 muss nur so groß sein, dass eine zuverlässige Fixierung der Abziehlasche 17 ermöglicht wird. Betrachtet man die Fig. 8 weiter, so kann man erkennen, dass die Abdeckung 16 im Bereich der 180 ° Umbiegung maximal 2 mm über die mit der Klebstoffschicht 5 belegte Seite 10 übersteht, wodurch die Klebstoffschicht 5 in diesem Abschnitt zuverlässig abgedeckt ist.

Mit der erfindungsgemäßen Befestigungsanordnung 1 ist eine preisgünstige, einfache, schnelle, justierbare, spannungsfreie, bearbeitungslose und zudem nahezu unsichtbare Befestigung des Flächenprofils 4 an dem Profilrohr 3 möglich, was mit bisherigen verschraubten bzw. verklemmten Verbindungen nicht möglich war. Zugleich kann eine einem Raum 8, beispielsweise einem Reinraum, hin ebene und geschlossene Oberfläche erreicht werden, wodurch eine hohe Klassifizierung nach GMP- oder ISO-Standard erreicht werden kann. Auch entfällt ein nachträgliches Verspachteln bzw. Versilikonieren eines Schraubenkopfes bzw. eines Klemmschenkels. Durch den Umstand, dass zur Montage, das heißt zur Herstellung der erfindungsgemäßen Befestigungsanordnung 1 kein weiteres Werkzeug erforderlich ist und die Montage zudem äußerst einfach ist, kann die Befestigungsanordnung 1 auch von geringer qualifizierten Kräften problemlos ausgeführt werden.

## Patentansprüche

1. Verfahren zur Herstellung einer Befestigungsanordnung (1) mit einem über ein Halteelement (2) an einem Profilrohr (3) befestigten Flächenelement (4), **dadurch gekennzeichnet, dass**
- auf zumindest eine Seite (10) des Halteelements (2) eine Klebstoffschicht (5) aufgebracht und mit einer U-förmig gebogenen Abdeckung (16) mit einer überstehenden Abziehlasche (17) überdeckt wird,
- das Haltelement (2) mit einem daran angeordneten Hammerkopfelement (7) in eine Längsnut (6) des Profilrohrs (3) eingesteckt und über eine 90° Drehbewegung derart fixiert wird, dass die Abziehlasche (17) an einer die Längsnut (6) aufweisenden Seite (18) des Profilrohrs (3) anliegt,
- das Flächenelement (4) derart auf die mit der Klebstoffschicht (5) belegte Seite (10) des Halteelements (2) aufgelegt wird, dass die Abziehlasche (17) zwischen dem Flächenelement (4) und der die Längsnut (6) aufweisenden Seite (18) des Profilrohrs (3) heraussteht,
- die Abdeckung (16) über die Abziehlasche (17) herausgezogen wird, wodurch das Flächenelement (4) mit der Klebstoffschicht (5) verklebt und das Flächenelement (4) an dem Halteelement (2) fixiert wird.

2. Verfahren nach Anspruch 1,
**dadurch gekennzeichnet,**
**dass** vor dem Auflegen des Flächenelements (4) auf die mit der Klebstoffschicht (5) belegte Seite (10) des Halteelements (2) ein Positionierelement (12) angeordnet wird, welches einen vordefinierten Abstand eines Randes des Flächenelements (4) zur der die Längsnut (6) aufweisenden Seite (18) des Profilrohrs (3) definiert.

3. Verfahren nach Anspruch 1 oder 2,
**dadurch gekennzeichnet,**
**dass** die U-förmig gebogene/gefaltete Abdeckung (16) derart auf der Klebstoffschicht (5) an dem Halteelement (2) angeordnet wird, dass bei an dem Profilrohr (3) montiertem Halteelement (2) die U-Form zu der die Längsnut 6) aufweisenden Seite (18) des Profilrohres (3) hin offen ist.

4. Verfahren nach einem der vorhergehenden Ansprüche,
**dadurch gekennzeichnet,**
**dass** ein transparentes Flächenelement (4) verwendet wird.

5. Befestigungsanordnung (1) hergestellt mit dem Verfahren nach einem der vorhergehenden Ansprüche,
- mit zumindest einem eine Längsnut (6) aufweisenden Profilrohr (3),
- mit einem Halteelement (2), das auf zumindest einer Seite (10) eine Klebstoffschicht (5) aufweist,
- mit einem Flächenelement (4), das über die Klebstoffschicht (5) mit dem Halteelement (2) verklebt und darüber an dem Halteelement (2) fixiert ist.

6. Befestigungsanordnung nach Anspruch 5,
**dadurch gekennzeichnet,**
**dass** die mit der Klebstoffschicht (5) belegte Seite (10) des Halteelements (2) gewölbt ist.

7. Befestigungsanordnung nach Anspruch 5 oder 6,
**dadurch gekennzeichnet,**
- **dass** das Halteelement (2) als Kunststoffspritzgussteil ausgebildet ist, und/oder
- **dass** das Profilrohr (3) als Aluminiumstrangpressprofil ausgebildet ist.

8. Befestigungsanordnung nach einem der Ansprüche 5 bis 7,
**dadurch gekennzeichnet,**
**dass** das Halteelement (2) zwei Federarme (9) aufweist.

9. Befestigungsanordnung nach einem der Ansprüche 5 bis 8,
**dadurch gekennzeichnet,**
**dass** ein Positionierelement vorgesehen ist, das zwei Beine (13) und einen diese beiden Beine (13) verbindenden Steg (15) aufweist, wobei an einem jeweiligen freie Ende der beiden Beine (13) jeweils eine nach innen weisende Rastnase (14) angeordnet ist, über welche eine Rastverbindung an dem Halteelement (2) möglich ist.

10. Befestigungsanordnung nach einem der Ansprüche 5 bis 9,
**dadurch gekennzeichnet,**
**dass** an dem Haltelement (2) zwei Leisten (11) angeordnet sind, die bei an dem Profilrohr (3) montiertem Halteelement (2) parallel zur Längsnut (6) verlaufen und über die sich das Haltelement (2) an dem Profilrohr (3) abstützt.

11. Befestigungsanordnung nach einem der Ansprüche 5 bis 10,
**dadurch gekennzeichnet,**
**dass** ein Bereich (20) der Klebefläche (5) mit einer Rückseite (19) der Abziehlasche (17) der Abdeckung (16) verklebt ist und diese dadurch fixiert.

12. Befestigungsanordnung nach Anspruch 11,
**dadurch gekennzeichnet,**
**dass** die Abziehlasche (17) einseitig silikonbeschichtet ist, wobei die Rückseite (19) der Abziehlasche (17) nicht silikonbeschichtet ist.
